# EUROPEAN PATENT SPECIFICATION

(11) **EP 3 866 221 B1**
(45) Date of publication and mention of the grant of the patent: **16.08.2023**
(21) Application number: 21155790.5
(22) Date of filing: 08.02.2021
(51) Int. Cl.: H01M 4/04, H01M 4/66, H01M 4/80, H01M 4/131, H01M 4/133, H01M 4/134, H01M 4/136, H01M 4/1391, H01M 4/1393, H01M 4/1395, H01M 4/1397, H01M 4/02

(54) **LITHIUM-ION SECONDARY BATTERY ELECTRODE AND LITHIUM-ION SECONDARY BATTERY**
ELEKTRODE EINER LITHIUM-IONEN-SEKUNDÄRBATTERIE UND LITHIUM-IONEN-SEKUNDÄRBATTERIE
ÉLECTRODE DE BATTERIE SECONDAIRE AU LITHIUM-ION ET BATTERIE SECONDAIRE AU LITHIUM-ION

(30) Priority: 14.02.2020 JP 2020023722
(43) Date of publication of application: 18.08.2021
(73) Proprietor: HONDA MOTOR CO., LTD., Minato-ku Tokyo 107-8556 (JP)
(72) Inventor: TANAAMI, Kiyoshi, Wako-shi, Saitama 351-0193 (JP); ISOGAI, Yuji, Wako-shi, Saitama 351-0193 (JP); TAKAHASHI, Makiko, Wako-shi, Saitama 351-0193 (JP); AOYAGI, Shintaro, Wako-shi, Saitama 351-0193 (JP)
(74) Representative: Böhm, Brigitte

(56) References cited:
- JP-A- 2003 308 831
- US-A1- 2012 263 993
- US-A1- 2015 072 236
- US-A1- 2017 256 777

## Description

This application is based on and claims the benefit of priority from Japanese Patent Application No. 2020-023722, filed on 14 February 2020.

### BACKGROUND OF THE INVENTION

### Field of the Invention

The present disclosure relates to a lithium-ion secondary battery electrode and a lithium-ion secondary battery including the lithium-ion secondary battery electrode.

### Related Art

Lithium-ion secondary batteries have been widely prevalent as secondary batteries having high energy densities. A lithium-ion secondary battery has a structure filled with a liquid electrolyte (electrolytic solution) with a separator interposed between a positive electrode and a negative electrode.

Such a lithium-ion secondary battery is desired to meet various demands depending on the intended use. For example, an increased volumetric energy density is demanded for applications such as cars. One method of meeting this demand is by increasing the packing density of an electrode active material.

As a method for increasing the packing density of an electrode active material, it has been proposed to use a metal foam as a current collector for forming a positive electrode layer and a negative electrode layer (see Japanese Unexamined Patent Application, Publication No. H07-099058 and Japanese Unexamined Patent Application, Publication No. H08-329954).
The metal foam has a reticulated structure with a uniform pore size and a large surface area.
By filling pores in the reticulated structure with an electrode material mixture containing an electrode active material, it is possible to increase the amount of the active material per unit area of each electrode layer.
US2015/072236A1 discloses metal foams for electrodes of secondary lithium batteries, methods for preparing such electrodes, and secondary lithium batteries including such metal foams. In this document, a metal foam is used in which the surface and the inner pore walls are coated with electrode active materials.
US2012/263993A1 discloses an electrochemical device which is easy to produce and which has excellent characteristics. Such device includes a first electrode including an aluminum porous body having interconnecting pores and an active material filled into the pores, a separator, and a second electrode. The first electrode, the separator and the second electrode are stacked and a plurality of electrode bodies each including the first electrode, the separator and the second electrode are stacked without being wound.

US 2017/256777 A1 discloses a cathode for a lithium-ion secondary battery including a current collector and active material supported on the current collector. The current collector is made of a porous material and the cathode has holes in its surface and an active material density is 50-80%.

JP 2003/308831 A discloses a non-aqueous secondary battery having high energy density and including a negative electrode that contains a current collector with a three-dimensional structure. The negative electrode includes a suitable quantity of voids so that the interior of the negative electrode is easily impregnated with an electrolytic solution.
Patent Document 1: Japanese Unexamined Patent Application, Publication No. 2000-106154
Patent Document 2: Japanese Unexamined Patent Application, Publication No. H07-099058
Patent Document 3: Japanese Unexamined Patent Application, Publication No. H08-329954
Patent Document 4: US2015/072236A1
Patent Document 5: US2012/263993A1
Patent Document 6: US 2017/256777A1
Patent Document 7: JP 2003/308831A

### SUMMARY OF THE INVENTION

An electrode formed by using a metal foam as a current collector has a higher loading than an electrode formed through coating of a metal foil as a current collector. However, the former has a larger thickness, leading to a decrease in permeability to the electrolytic solution and insufficient penetration of the electrolytic solution deep into the electrode.
Consequently, supplies of anions and cations are inadequate. Including such an electrode therefore increases the internal resistance of a resulting lithium-ion secondary battery cell and degrades battery input/output properties (power density).

Furthermore, since the electrode formed by using a metal foam as a current collector is thicker, ions have to travel a longer distance within the electrode and the ion diffusion resistance is higher. This results in an increase in the cell resistance, a reduction in the rate capability, and a reduction in the durability.

The present disclosure was achieved in consideration of the above-described circumstances, and an objective thereof is to provide an electrode including a metal foam as a current collector for obtaining a lithium-ion secondary battery having a high energy density. More particularly, the objective of the present disclosure is to provide a lithium-ion secondary battery electrode that achieves improved input/output properties (power density) and improved durability, and a lithium-ion secondary battery including the lithium-ion secondary battery electrode.

In order to solve the above-described problems, the inventors of the present disclosure have made intensive studies to find the following.
That is, it is possible to provide, in an electrode layer, a region having an excessive amount of an electrolytic solution by forming a region where a current collector made of a metal foam contains no electrode material mixture, which material mixture-free region penetrates through the electrode layer, and filling the region with the electrolytic solution. This results in an improvement in the penetration of the electrolytic solution into the resulting electrode and a reduction in the traveling distance of anions and cations, and ensures sufficient ion conductivity. Thus, the inventors completed the present disclosure.

That is, an aspect of the present disclosure is directed to a lithium-ion secondary battery electrode including: a current collector made of a porous metal foam; and an electrode layer including an electrode material mixture filling the current collector. The electrode layer has a material mixture-free region therein where the current collector is not filled with the electrode material mixture.

The material mixture-free region is filled with an electrolytic solution.

The material mixture-free region penetrates through the electrode layer and has a quadrilateral prism shape or a cylinder shape.

The material mixture-free region includes a plurality of material mixture-free regions.

The material mixture-free regions are arranged substantially perpendicular to each other.

The current collector may be made of aluminum foam.

The lithium-ion secondary battery electrode may be a positive electrode.

The current collector may be made of copper foam.

The lithium-ion secondary battery electrode may be a negative electrode.

Another aspect of the present disclosure is directed to a lithium-ion secondary battery including: a positive electrode; a negative electrode; and a separator or a solid electrolyte layer disposed between the positive electrode and the negative electrode. At least one of the positive electrode and the negative electrode is the lithium-ion secondary battery electrode described above.

The lithium-ion secondary battery electrode according to the present disclosure allows for production of a lithium-ion secondary battery that has a high energy density and that is improved in both output properties and durability.

### BRIEF DESCRIPTION OF THE DRAWINGS

FIG. 1 is a cross-sectional view of an electrode layer in a lithium-ion secondary battery electrode;
FIG. 2 is a cross-sectional view of an electrode layer in a lithium-ion secondary battery electrode;
FIG. 3 is a cross-sectional view of an electrode layer in the lithium-ion secondary battery electrode according to the present invention;
FIG. 4A is a cross-sectional view of an electrode layer in a lithium-ion secondary battery electrode of Example 1 (not according to the invention);
FIG. 4B is a top view of the electrode layer in the lithium-ion secondary battery electrode of Example 1 (not according to the invention);
FIG. 5A is a cross-sectional view of an electrode layer in a lithium-ion secondary battery electrode of Example 2 (not according to the invention);
FIG. 5B is a top view of the electrode layer in the lithium-ion secondary battery electrode of Example 2(not according to the invention);
FIG. 6A is a cross-sectional view of an electrode layer in a lithium-ion secondary battery electrode of Example 3 (according to the invention);
FIG. 6B is a top view of the electrode layer in the lithium-ion secondary battery electrode of Example 3 (according to the invention);
FIG. 7 is a graph showing the initial cell resistance during discharge of the lithium-ion secondary batteries produced in the Examples according and not according to the invention and a Comparative Example;
FIG. 8 is a graph showing the initial cell resistance during charge of the lithium-ion secondary batteries produced in the Examples according and not according to the invention and a Comparative Example;
FIG. 9 is a graph showing the C rate capability of the lithium-ion secondary batteries produced in the Examples according and not according to the invention and a Comparative Example; and
FIG. 10 is a graph showing the capacity retention determined for every 200 charge-discharge cycles with respect to the lithium-ion secondary batteries produced in the Examples according and not according to the invention and a Comparative Example.

### DETAILED DESCRIPTION OF THE INVENTION

The following describes embodiments of the present disclosure with reference to the accompanying drawings.

### <Lithium-ion Secondary Battery Electrode>

A lithium-ion secondary battery electrode according to the present disclosure includes a current collector made of a porous metal foam and an electrode layer including an electrode material mixture filling the current collector.

No particular limitations are placed on batteries to which the lithium-ion secondary battery electrode according to the present disclosure is applicable as long as the batteries contain an electrolytic solution, which is a liquid electrolyte.

The lithium-ion secondary battery electrode according to the present disclosure can be used without problem in applications to a positive electrode, a negative electrode, or both in a lithium-ion secondary battery.
Effects of the lithium-ion secondary battery electrode according to the present disclosure are more significant in the application to the positive electrode than in the application to the negative electrode, because an active material for the negative electrode has higher electron conductivity.

### [Current Collector]

The current collector forming the lithium-ion secondary battery electrode according to the present disclosure is a porous metal foam. No particular limitations are placed on the porous metal foam other than being a porous solid made of a metal having openings formed through foaming.

A metal foam has a reticulated structure with a large surface area.
The use of a porous metal foam as the current collector allows the electrode material mixture containing an electrode active material to fill pores in the reticulated structure of the current collector. It is therefore possible to increase the amount of the active material per unit area of the electrode layer, and thus to increase the volumetric energy density of the resulting lithium-ion secondary battery.

The use of a porous metal foam also facilitates fixation of the electrode material mixture. It is therefore possible to increase the thickness of the electrode material mixture layer without increasing the viscosity of a coating slurry serving as the electrode material mixture.
That is, the use of a porous metal foam reduces the amount of a binder containing an organic polymer, which is otherwise necessary for increasing the viscosity.

The electrode can therefore have a thicker electrode material mixture layer compared to an electrode that includes a conventional metal foil as a current collector. As a result, the electrode can have an increased capacity per unit area, enabling the resulting lithium-ion secondary battery to achieve an increased capacity.

Examples of metals for the porous metal foam include nickel, aluminum, stainless steel, titanium, copper, and silver.
In particular, aluminum foam is preferably used as the current collector for forming the positive electrode, and copper foam or stainless steel foam is preferably used as the current collector for forming the negative electrode.

### [Electrode Layer]

The electrode layer in the lithium-ion secondary battery electrode according to the present disclosure is obtained by filling the current collector, which is a porous metal foam, with the electrode material mixture.

No particular limitations are placed on the thickness of the electrode layer. However, since a porous metal foam is used as the current collector, the electrode layer in the lithium-ion secondary battery electrode according to the present disclosure can have a large thickness.
This results in an increase in the amount of the active material per unit area of the electrode layer and helps produce a battery having a high energy density.

The electrode layer in the lithium-ion secondary battery electrode according to the present disclosure has, for example, a thickness of 200 µm to 400 µm.

### {Electrode Material Mixture}

The electrode material mixture for forming the electrode layer according to the present disclosure contains at least an electrode active material.
The electrode material mixture applicable to the present disclosure may contain other components as optional components as long as the electrode material mixture contains an electrode active material as an essential component.
No particular limitations are placed on the optional components other than being usable in production of lithium-ion secondary batteries. Examples thereof include a solid electrolyte, a conductive aid, and a binder.

### (Positive Electrode Material Mixture)

A positive electrode material mixture for forming a positive electrode layer contains at least a positive electrode active material and may contain, for example, a solid electrolyte, a conductive aid, and a binder as optional components.
No particular limitations are placed on the positive electrode active material other than being capable of storing and releasing lithium ions. Examples thereof include LiCoO₂, Li(Ni_{5/10}Co_{2/10}Mn_{3/10})O₂, Li(Ni_{6/10}Co_{2/10}Mn_{2/10})O₂, Li(Ni_{8/10}Co_{1/10}Mn_{1/10})O₂, Li(Ni_{0.8}Co_{0.15}Al_{0.05})O₂, Li(Ni_{1/6}Co_{4/6}Mn_{1/6})O₂, Li(Ni_{1/3}Co_{1/3}Mn_{1/3})O₂, LiCoO₄, LiMn₂O₄, LiNiO₂, LiFePO₄, lithium sulfide, and sulfur.

### (Negative Electrode Material Mixture)

A negative electrode material mixture for forming a negative electrode layer contains at least a negative electrode active material and may contain, for example, a solid electrolyte, a conductive aid, and a binder as optional components.
No particular limitations are placed on the negative electrode active material other than being capable of storing and releasing lithium ions. Examples thereof include metallic lithium, lithium alloys, metal oxides, metal sulfides, metal nitrides, Si, SiO, and carbon materials such as artificial graphite, natural graphite, hard carbon, and soft carbon.

### {Material Mixture-free Region}

The electrode layer in the lithium-ion secondary battery electrode according to the present disclosure has a material mixture-free region therein where the current collector is not filled with the electrode material mixture.

The electrode layer of the lithium-ion secondary battery electrode according to the present disclosure is formed by filling the current collector, which is a porous metal foam, with the electrode material mixture.
The material mixture-free region can therefore be formed by not filling a portion of the current collector with the electrode material mixture.

Since the electrode material mixture is not present in the material mixture-free region, the material mixture-free region is the current collector being an as-prepared porous foam. That is, the porous solid is exposed in the material mixture-free region.
The material mixture-free region in the lithium-ion secondary battery electrode according to the present disclosure is filled with an electrolytic solution for use.

Filling the material mixture-free region with an electrolytic solution improves the penetration of the electrolytic solution into the electrode and decreases the traveling distance of anions and cations. Furthermore, sufficient ion conductivity is ensured.

Since the electrolytic solution sufficiently penetrates deep into the electrode and insufficient supplies of anions and cations are avoided, it is possible to restrict the internal resistance of the resulting lithium-ion secondary battery cell from increasing and to improve the battery input/output properties (power density).

Since the traveling distance of ions within the electrode is decreased, it is possible to restrict the ion diffusion resistance from increasing despite the large thickness of the electrode layer. This restriction results in an improvement in the durability such as the rate capability.
In particular, even under a high load such as in fast charge and discharge, ions are supplied quickly enough to contribute to an improvement in the durability under high-load environmental conditions.

Furthermore, since insufficient supplies of electrons are avoided, it is possible to restrict the electronic resistance from increasing and to improve the output properties of the lithium-ion secondary battery despite the large thickness of the electrode layer.

### (Formation of Material Mixture-free Region)

The material mixture-free region has a quadrilateral prism shape or a cylinder shape.
The material mixture-free region having a quadrilateral prism shape or a cylinder shape is easily formed in the current collector, which is a porous foam, and facilitates uniform diffusion of the electrolytic solution in the electrode layer.

### (Arrangement of Material Mixture-free Region)

The material mixture-free region penetrates through the electrode layer.

As the material mixture-free region penetrates through the electrode layer, the electrolytic solution is allowed to diffuse throughout the electrode layer easily.

The electrode layer comprises a plurality of material mixture-free regions.

Forming a plurality of material mixture-free regions allows the electrolytic solution to diffuse throughout the electrode layer more easily.

The plurality of material mixture-free regions in a symmetrical arrangement with respect to the center of the electrode layer include material mixture-free regions arranged to crisscross each other.

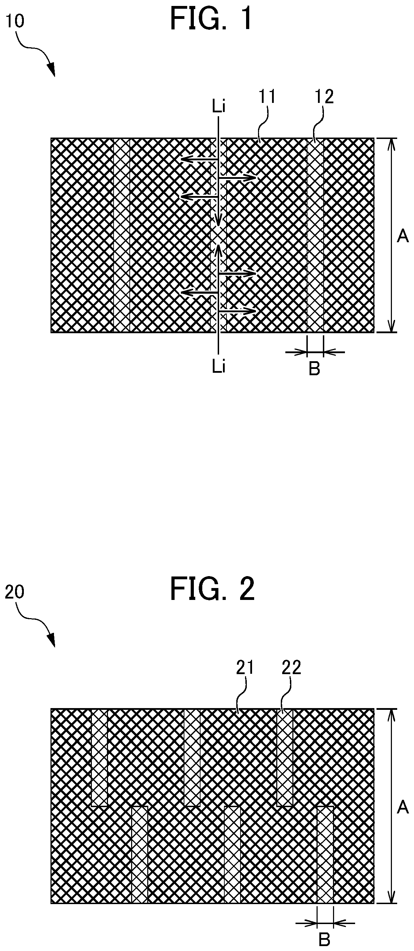

The following describes arrangements of the material mixture-free regions in the lithium-ion secondary battery electrode according to the present disclosure with reference to FIGS. 1 to 3.

FIG. 1 is a cross-sectional view of an electrode layer in the lithium-ion secondary battery electrode which is not an embodiment of the present invention.
An electrode layer 10 illustrated in FIG. 1 includes an electrode material mixture 11 as a component, and has three material mixture-free regions 12 formed therein and arranged substantially parallel to a thickness direction A of the electrode layer 10.

The shapes of the three material mixture-free regions 12 in FIG. 1 are quadrilateral prisms having substantially the same size with a width B.
The three material mixture-free regions 12 penetrate through the electrode layer 10 from one surface to an opposite surface of the electrode layer 10.

The material mixture-free regions 12 are filled with an electrolytic solution. Arrows in FIG. 1 represent movement of lithium ions in the middle material mixture-free region 12.
As illustrated in FIG. 1, lithium ions diffuse from the electrolytic solution filling the material mixture-free regions 12 into other internal regions of the electrode layer 10.

FIG. 2 is a cross-sectional view of an electrode layer in a lithium-ion secondary battery electrode which is not an embodiment of the present disclosure.

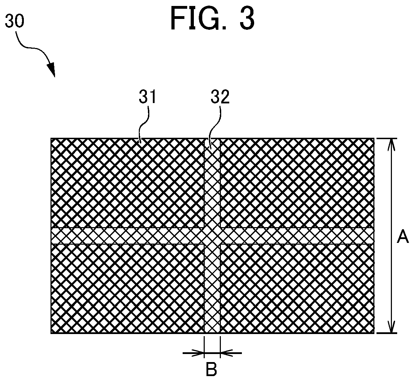

FIG. 3 is a cross-sectional view of an electrode layer in the lithium-ion secondary battery electrode according to the present disclosure.
An electrode layer 30 illustrated in FIG. 3 includes an electrode material mixture 31 as a component and has two material mixture-free regions 32 formed therein.
One of the material mixture-free regions 32 is formed so as to extend in a direction parallel to the thickness direction A and pass through an approximate center of the electrode layer 30. The other material mixture-free region 32 is formed so as to extend in a direction perpendicular to the thickness direction A and pass through the approximate center of the electrode layer 30.

The shapes of the two material mixture-free regions 32 in FIG. 3 are quadrilateral prisms having substantially the same cross-sectional area with a width B.
The two material mixture-free regions 32 are formed so as to intersect with each other at the approximate center of the electrode layer 30, with each material mixture-free region 32 penetrating through the electrode layer 30 from one surface to an opposite surface of the electrode layer 30.
Such an arrangement of the material mixture-free regions improves the penetration of a high-viscosity electrolytic solution and improves the ion diffusivity.

### (Occupancy Rate of Material Mixture-free Region in Electrode Layer)

No particular limitations are placed on the occupancy rate of the material mixture-free regions in the electrode layer. For example, the material mixture-free regions preferably have an occupancy rate of 0.5% to 5% relative to the whole electrode layer.
An occupancy rate of less than 0.5% leads to a decrease of not more than 5 Wh/L in the volumetric energy density of the resulting cell, having no significant influence. However, an occupancy rate of more than 5% leads to an increase in the amount of the electrolytic solution in addition to a decrease in the volumetric energy density, and thus causes a decrease in the gravimetric energy density and a decrease in the electron conductivity at the same time. This degrades the input/output properties of the resulting cell as a whole.

### <Production Method of Lithium-ion Secondary Battery Electrode>

No particular limitations are placed on the method for producing the lithium-ion secondary battery electrode according to the present disclosure, and an ordinary method in the art may be employed.

The lithium-ion secondary battery electrode according to the present disclosure has an electrode layer including an electrode material mixture filling a current collector made of a porous metal foam. The electrode layer has a material mixture-free region therein where the current collector is not filled with the electrode material mixture.

No particular limitations are placed on the method for filling the current collector with the electrode material mixture. Examples thereof include a method involving filling pores in the reticulated structure of the current collector with a slurry containing the electrode material mixture through application of pressure using a plunger-type die coater.

The material mixture-free region where the current collector is not filled with the electrode material mixture can be formed by not applying pressure to a region while moving the die coater.

After filling with the electrode material mixture, an ordinary method in the art may be employed to produce the lithium-ion secondary battery electrode.
For example, the lithium-ion secondary battery electrode is produced by drying and subsequently pressing the current collector filled with the electrode material mixture.
Pressing the current collector increases and adjusts the density of the electrode material mixture to a desired density.

### <Lithium-ion Secondary Battery>

The lithium-ion secondary battery according to the present disclosure includes a positive electrode, a negative electrode, and a separator or a solid electrolyte layer disposed between the positive electrode and the negative electrode.
At least one of the positive electrode and the negative electrode in the lithium-ion secondary battery according to the present disclosure is the above-described lithium-ion secondary battery electrode according to the present disclosure.

That is, in the lithium-ion secondary battery according to the present disclosure, the positive electrode, the negative electrode, or both may be the lithium-ion secondary battery electrode according to the present disclosure.

### [Positive Electrode and Negative Electrode]

No particular limitations are placed on the positive electrode or the negative electrode to which the lithium-ion secondary battery electrode according to the present disclosure is not applied in the lithium-ion secondary battery according to the present disclosure other than having a function of a positive electrode or a negative electrode of a lithium-ion secondary battery.

For the positive electrode and the negative electrode of the lithium-ion secondary battery, two materials are selected from materials capable of forming electrodes, and charge and discharge potentials of the two materials are compared. The material having a noble potential is used for the positive electrode and the material having a less noble potential is used for the negative electrode. Thus, a desired battery is produced.

### [Separator]

In a case where the lithium-ion secondary battery according to the present disclosure includes a separator, the separator is disposed between the positive electrode and the negative electrode. No particular limitations are placed on the material and properties such as the thickness thereof, and a known separator usable for lithium-ion secondary batteries may be employed.

### [Solid Electrolyte Layer]

In a case where the lithium-ion secondary battery according to the present disclosure includes a solid electrolyte layer, the solid electrolyte layer is disposed between the positive electrode and the negative electrode for forming a cell.
No particular limitations are placed on the solid electrolyte contained in the solid electrolyte layer other than being capable of lithium ion conduction between the positive electrode and the negative electrode.
Examples thereof include oxide-based electrolytes and sulfide-based electrolytes.

### EXAMPLES

The following describes Examples and a Comparative Example of the present disclosure. However, the present disclosure is not limited to these examples.

### <Example 1> (not according to the invention)

### [Preparation of Lithium-ion Secondary Battery Positive Electrode]

A sheet of aluminum foam having a thickness of 1.0 mm, a porosity of 95%, a cell density of 46 to 50 cells/25.4 mm (1.8 to 2.0 cells/mm), a pore size of 0.5 mm, and a specific surface area of 5000 m²/m³ was prepared as a current collector.

### (Preparation of Positive Electrode Material Mixture Slurry)

LiNi_{0.5}Co_{0.2}Mn_{0.3}O₂ was prepared as a positive electrode active material.
A mixture was prepared by mixing 94% by mass of the positive electrode active material, 4% by mass of carbon black as a conductive aid, and 2% by mass of polyvinylidene fluoride (PVDF) as a binder. The mixture was then dispersed in an appropriate amount of N-methyl-2-pyrrolidone (NMP) to give a positive electrode material mixture slurry.

### (Formation of Positive Electrode Layer)

The thus prepared positive electrode material mixture slurry was applied to the current collector in an amount such as to give a loading of 90 mg/cm² using a plunger-type die coater.
At the same time, material mixture-free regions were formed by not applying pressure to portions.
Subsequently, the current collector was dried under vacuum at 120°C for 12 hours, and then roll-pressed at a pressure of 15 tons. Thus, a lithium-ion secondary battery positive electrode was prepared.

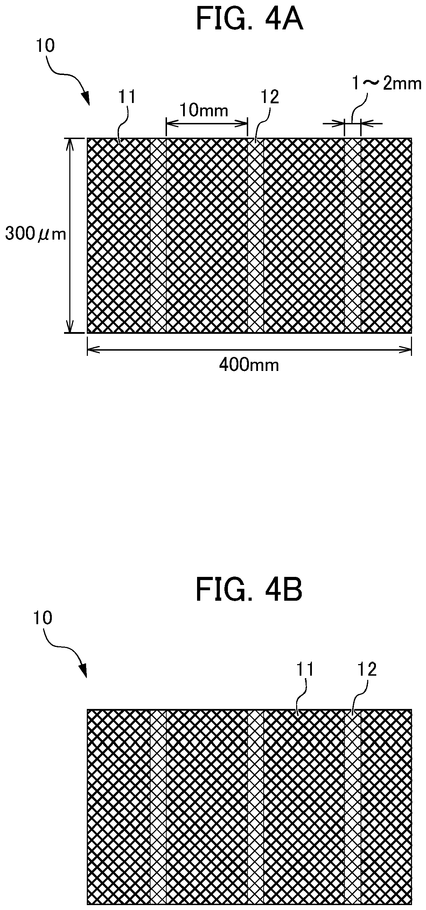

FIGS. 4A and 4B are respectively a cross-sectional view and a top view of the electrode layer of the thus obtained lithium-ion secondary battery positive electrode.
In Example 1, an electrode layer having a short dimension of 1100 mm, a long dimension of 1400 mm, and a thickness of 300 µm was formed. In the electrode layer, three material mixture-free regions were formed having a quadrilateral prism shape with a width of 1 µm to 2 um and penetrating through the electrode layer from one surface to an opposite surface of the electrode layer. The material mixture-free regions were arranged substantially parallel to the thickness direction of the electrode layer at an interval of 10 µm.

The electrode layer in the resulting lithium-ion secondary battery positive electrode had a loading of 90 mg/cm² and a density of 3.2 g/cm³.
The thus prepared positive electrode was punched out to a size of 3 cm × 4 cm for use.

### [Preparation of Lithium-ion Secondary Battery Negative Electrode]

### (Preparation of Negative Electrode Material Mixture Slurry)

A mixture was prepared by mixing 96.5% by mass of natural graphite, 1% by mass of carbon black as a conductive aid, 1.5% by mass of styrene-butadiene rubber (SBR) as a binder, and 1% by mass of sodium carboxymethyl cellulose (CMC) as a thickener. The mixture was then dispersed in an appropriate amount of distilled water to give a negative electrode material mixture slurry.

### (Formation of Negative Electrode Layer)

A sheet of copper foil having a thickness of 8 µm was prepared as a current collector.
The prepared negative electrode material mixture slurry was applied to the current collector in an amount such as to give a loading of 45 mg/cm² using a die coater.
The current collector was dried under vacuum at 120°C for 12 hours, and then roll-pressed at a pressure of 10 tons.
Thus, a lithium-ion secondary battery negative electrode was prepared. The electrode layer in the resulting lithium-ion secondary battery negative electrode had a loading of 45 mg/cm² and a density of 1.5 g/cm³.
The thus prepared negative electrode was punched out to a size of 3 cm × 4 cm for use.

### [Production of Lithium-ion Secondary Battery]

A sheet of microporous film having a thickness of 25 µm and a three-layer structure of polypropylene/polyethylene/polypropylene was prepared and punched out to a size of 4 cm × 5 cm for use as a separator.
A stack obtained by disposing the separator between the positive electrode and the negative electrode prepared as described above was enclosed in a pouch obtained by heat sealing a secondary battery aluminum laminate. Thus, a laminate cell was prepared.

A solution was prepared as an electrolytic solution by dissolving 1.2 mol of LiPF₆ in a solvent obtained by mixing ethylene carbonate, dimethyl carbonate, and ethylmethyl carbonate at a volume ratio of 3:4:3, and was introduced into the laminate cell. Thus, a lithium-ion secondary battery was produced.

### <Example 2> (Not according to the invention)

### [Preparation of Lithium-ion Secondary Battery Positive Electrode]

Aluminum foam having the same properties as in Example 1 was prepared as a current collector.

### (Preparation of Positive Electrode Material Mixture Slurry)

A positive electrode material mixture slurry was prepared according to the same method as in Example 1.

### (Formation of Positive Electrode Material Mixture Layer)

A lithium-ion secondary battery positive electrode was prepared according to the same method as in Example 1 in all aspects other than adjusting the pressure for the application of the prepared positive electrode material mixture slurry so as to form material mixture-free regions in a different arrangement from Example 1.

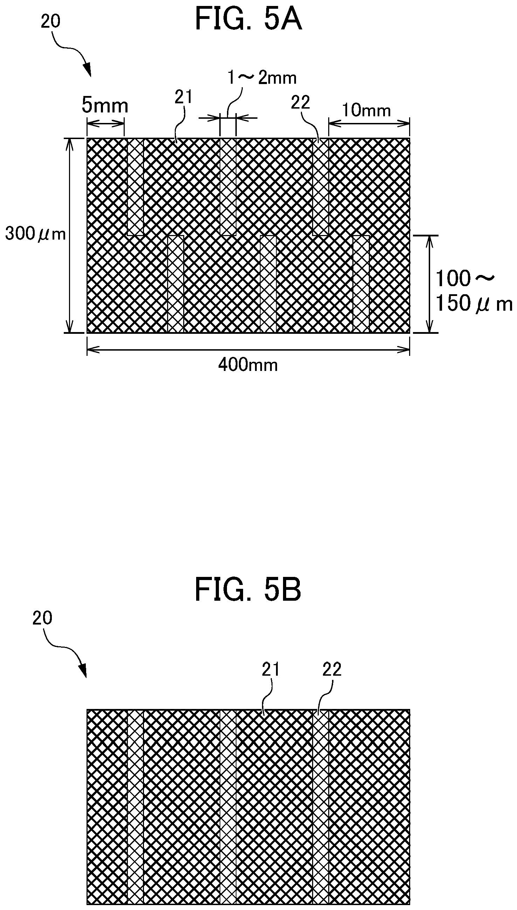

FIGS. 5A and 5B are respectively a cross-sectional view and a top view of the electrode layer of the resulting lithium-ion secondary battery positive electrode.
In Example 2, an electrode layer having a short dimension of 1100 mm, a long dimension of 1400 mm, and a thickness of 300 µm was formed. In the electrode layer, six material mixture-free regions were formed having a quadrilateral prism shape with a width of 1 µm to 2 µm and extending over a length of 100 µm to 150 µm from one surface to a center line of the electrode layer in the thickness direction of the electrode layer, with adjacent material mixture-free regions extending from opposite surfaces. The material mixture-free regions were arranged substantially parallel to the thickness direction of the electrode layer in a staggered manner at an interval of 10 µm.

The electrode layer in the resulting lithium-ion secondary battery positive electrode had a loading of 90 mg/cm² and a density of 3.2 g/cm³.
The thus prepared positive electrode was punched out to a size of 3 cm × 4 cm for use.

### [Preparation of Lithium-ion Secondary Battery Negative Electrode]

A lithium-ion secondary battery negative electrode was prepared according to the same method as in Example 1.

### [Production of Lithium-ion Secondary Battery]

A lithium-ion secondary battery was produced according to the same method as in Example 1 in all aspects other than using the positive electrode and the negative electrode prepared as described above.

### <Example 3> (According to the invention)

### [Preparation of Lithium-ion Secondary Battery Positive Electrode]

Aluminum foam having the same properties as in Example 1 was prepared as a current collector.

### (Preparation of Positive Electrode Material Mixture Slurry)

A positive electrode material mixture slurry was prepared according to the same method as in Example 1.

### (Formation of Positive Electrode Material Mixture Layer)

A lithium-ion secondary battery positive electrode was prepared according to the same method as in Example 1 in all aspects other than adjusting the pressure for the application of the prepared positive electrode material mixture slurry so as to form material mixture-free regions in a different arrangement from Example 1.

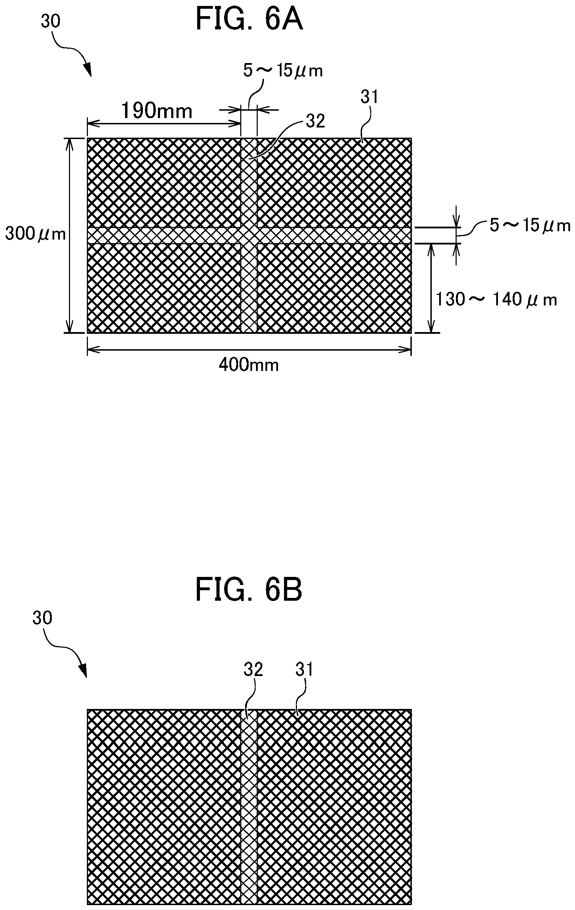

FIGS. 6A and 6B are respectively a cross-sectional view and a top view of the electrode layer of the resulting lithium-ion secondary battery positive electrode.
In Example 3, an electrode layer having a short dimension of 1100 mm, a long dimension of 1400 mm, and a thickness of 300 um was formed. In the electrode layer, two material mixture-free regions were formed having a quadrilateral prism shape with a width of 1 µm to 2 µm and substantially the same cross-sectional area.
One of the material mixture-free regions was formed so as to extend in a direction parallel to the thickness direction of the electrode layer and pass through an approximate center of the electrode layer. The other material mixture-free region was formed so as to extend in a direction perpendicular to the thickness direction and pass through the approximate center of the electrode layer.
The two material mixture-free regions were formed so as to intersect with each other at the approximate center of the electrode layer, with each material mixture-free region penetrating through the electrode layer from one surface to an opposite surface of the electrode layer.

The electrode layer in the resulting lithium-ion secondary battery positive electrode had a loading of 90 mg/cm² and a density of 3.2 g/cm³.
The thus prepared positive electrode was punched out to a size of 3 cm × 4 cm for use.

### [Preparation of Lithium-ion Secondary Battery Negative Electrode]

A lithium-ion secondary battery negative electrode was prepared according to the same method as in Example 1.

### [Production of Lithium-ion Secondary Battery]

A lithium-ion secondary battery was produced according to the same method as in Example 1 in all aspects other than using the positive electrode and the negative electrode prepared as described above.

### <Comparative Example 1>

### [Preparation of Lithium-ion Secondary Battery Positive Electrode]

A lithium-ion secondary battery positive electrode was prepared according to the same method as in Example 1 in all aspects other than no formation of material mixture-free region in the aluminum foam. The electrode layer in the resulting lithium-ion secondary battery positive electrode had a loading of 90 mg/cm² and a density of 3.2 g/cm³.

### [Preparation of Lithium-ion Secondary Battery Negative Electrode]

A lithium-ion secondary battery negative electrode was prepared according to the same method as in Example 1.

### [Production of Lithium-ion Secondary Battery]

A lithium-ion secondary battery was produced according to the same method as in Example 1 in all aspects other than using the positive electrode and the negative electrode prepared as described above.

### <Evaluation of Lithium-ion Secondary Batteries>

The following evaluations were performed on the lithium-ion secondary batteries obtained in Examples 1 to 3 and Comparative Example 1.

### [Initial Discharge Capacity]

Each of the lithium-ion secondary batteries was left to stand at a measurement temperature (25°C) for 3 hours, and then charged up to 4.2 V through constant-current charge at 0.33 C. Subsequently, the lithium-ion secondary battery was charged for 5 hours at a constant voltage of 4.2 V, left to stand for 30 minutes, and discharged to 2.5 V at a discharge rate of 0.33 C. Thus, the discharge capacity was measured.
The thus obtained discharge capacity was taken to be the initial discharge capacity.

### [Initial Cell Resistance (at Discharge)]

After the measurement of the initial discharge capacity, each lithium-ion secondary battery was adjusted to a charge level (state of charge: SOC) of 50%.
Next, the lithium-ion secondary battery was discharged for 10 seconds at a current value corresponding to 0.2 C. Voltage values were measured 0.1 seconds, 1 second, and 10 seconds after the beginning of the discharge.
The voltage values measured 0.1 seconds, 1 second, and 10 seconds after the beginning of the discharge were plotted against the current value corresponding to 0.2 C in a graph in which the horizontal axis represents current value and the vertical axis represents voltage. Next, the lithium-ion secondary battery was left to stand for 10 minutes, subjected to auxiliary charge to return to a SOC of 50%, and further left to stand for 10 minutes.
Next, the same steps as described above were performed at C rates of 0.5 C, 1.0 C, 1.5 C, 2.0 C, and 2.5 C, and voltage values measured 0.1 seconds, 1 second, and 10 seconds after the beginning of the discharge were plotted against current values corresponding to the respective C rates.
Gradients of approximate straight lines obtained from the plotted voltage values were taken to be values of the initial cell resistance of the lithium-ion secondary battery at discharge.

### [Initial Cell Resistance (at Charge)]

After the measurement of the initial cell resistance (at discharge), each lithium-ion secondary battery was adjusted to a charge level (state of charge: SOC) of 50%.
Next, the lithium-ion secondary battery was charged for 10 seconds at a current value corresponding to 0.2 C. Voltage values were measured 0.1 seconds, 1 second, and 10 seconds after the beginning of the charge.
The voltage values measured 0.1 seconds, 1 second, and 10 seconds after the beginning of the charge were plotted against the current value corresponding to 0.2 C in a graph in which the horizontal axis represents current value and the vertical axis represents voltage. Next, the lithium-ion secondary battery was left to stand for 10 minutes, subjected to auxiliary discharge to return to a SOC of 50%, and further left to stand for 10 minutes.
Next, the same steps as described above were performed at C rates of 0.5 C, 1.0 C, 1.5 C, 2.0 C, and 2.5 C, and voltage values measured 0.1 seconds, 1 second, and 10 seconds after the beginning of the charge were plotted against current values corresponding to the respective C rates.
Gradients of approximate straight lines obtained from the plotted voltage values were taken to be values of the initial cell resistance of the lithium-ion secondary battery at charge.

### [C Rate Capability]

After the measurement of the initial discharge capacity, each lithium-ion secondary battery was left to stand at a measurement temperature (25°C) for 3 hours, and then charged up to 4.2 V through constant-current charge at 0.33 C. Subsequently, the lithium-ion secondary battery was charged for 5 hours at a constant voltage of 4.2 V, left to stand for 30 minutes, and discharged to 2.5 V at a discharge rate of 0.5 C. Thus, the discharge capacity was measured. The above-described measurement was performed with respect to C rates of 0.75 C, 1.0 C, 1.5 C, 2.0 C, and 2.5 C. The thus obtained values of the discharge capacity corresponding to the respective C rates were used to calculate values of the capacity retention based on the capacity corresponding to 0.33 C being 100%. The values of the discharge capacity and the capacity retention were consolidated as data representing the C rate capability.

### [Post-endurance Discharge Capacity]

As a charge-discharge cycle durability test, each lithium-ion secondary battery was subjected to 200 charge-discharge cycles. In each cycle, the lithium-ion secondary battery was charged to 4.2 V in a thermostatic chamber at 45°C through constant-current charge at 0.6 C, charged at a constant voltage of 4.2 V for 5 hours or until the current dropped to 0.1 C, left to stand for 30 minutes, discharged to 2.5 V through constant-current discharge at a discharge rate of 0.6 C, and then left to stand for 30 minutes.
After enduring the 200 cycles, the lithium-ion secondary battery discharged to 2.5 V was left to stand for 24 hours in a thermostatic chamber at 25°C. Subsequently, the discharge capacity was measured according to the same method as the measurement of the initial discharge capacity.
The test was repeated up to the 600th cycle, and the measurement was performed every 200 cycles.

### [Post-endurance Cell Resistance]

After enduring the 600 cycles, the lithium-ion secondary battery was adjusted to a charge level (state of charge: SOC) of 50%, and the post-endurance cell resistance was determined according to the same method as the measurement of the initial cell resistance (at discharge).

### [Capacity Retention]

The percentage of the discharge capacity measured every 200 cycles relative to the initial discharge capacity was calculated to determine the capacity retention for every 200 cycles.

### [Percentage Change in Resistance]

The percentage of the post-endurance cell resistance relative to the initial cell resistance was calculated to determine the percentage change in resistance.

Table 1 shows configurations of the lithium-ion secondary batteries produced in Examples and a Comparative Example, and results of the measurements.

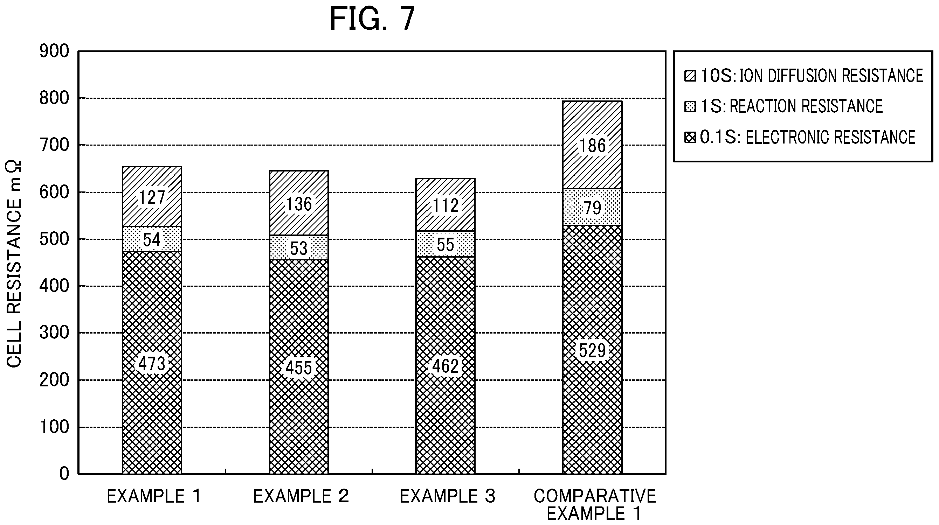

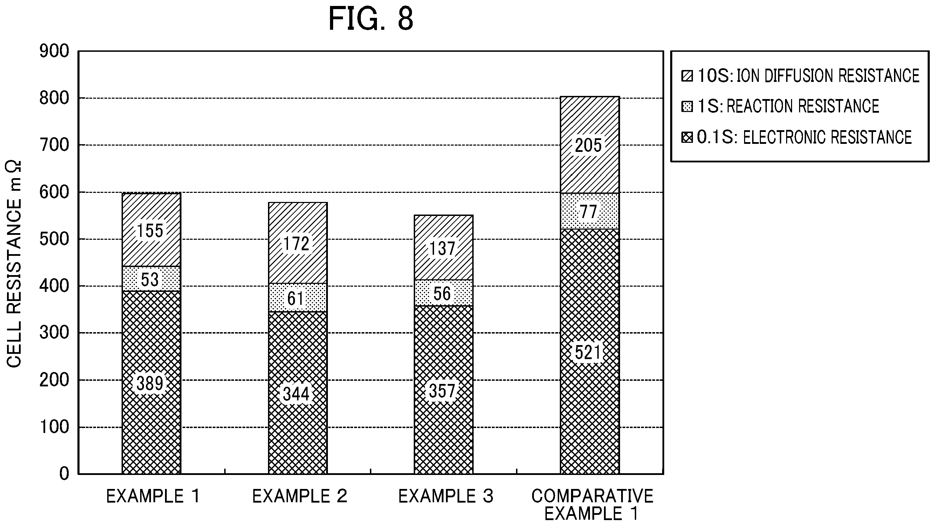

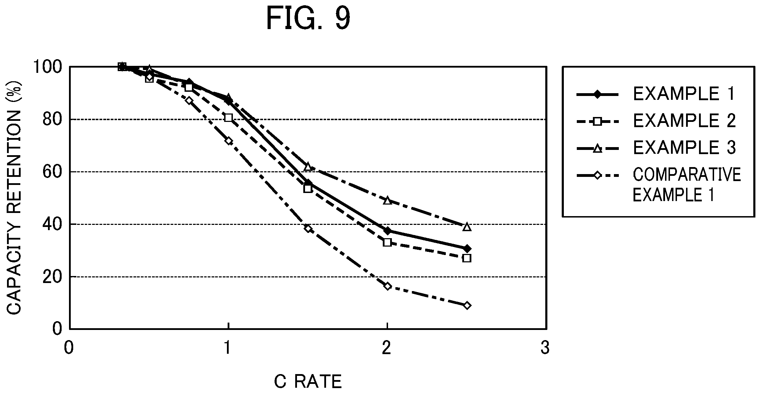

FIGS. 7 and 8 respectively show the initial cell resistance at discharge and the initial cell resistance at charge of the lithium-ion secondary batteries produced in Examples and a Comparative Example. FIG. 9 shows the C rate capability of the lithium-ion secondary batteries produced in Examples and a Comparative Example.

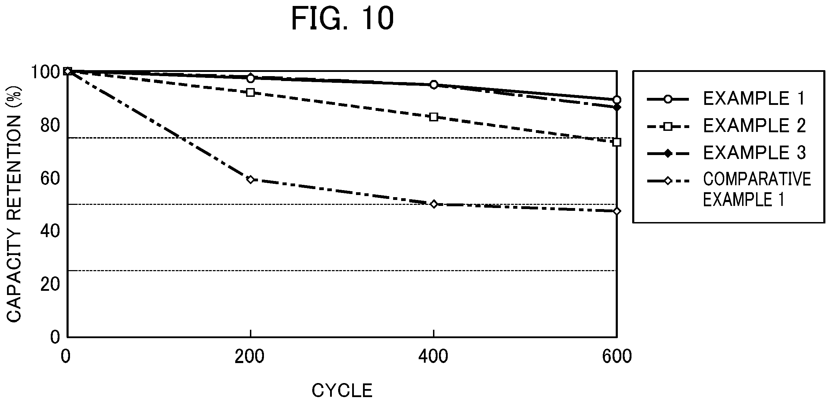

FIG. 10 shows the capacity retention determined for every 200 cycles.

**[Table 1]**

| | | Example 1 | Example 2 | Example 3 | Comparative Example 1 |
|---|---|---|---|---|---|
| Initial discharge capacity (mAh) | | 167 | 169 | 162 | 160 |
| Initial cell resistance (Ω) at discharge | 0.1S:Electronic resistance | 473 | 455 | 462 | 529 |
| | 1S:Reaction resistance | 54 | 53 | 55 | 79 |
| | S:Ion diffusion resistance | 127 | 136 | 112 | 186 |
| | Total | 654 | 644 | 629 | 793 |
| Initial cell resistance (Ω) at charge | 0.1S:Electronic resistance | 389 | 344 | 357 | 521 |
| | 1S:Reaction resistance | 53 | 61 | 56 | 77 |
| | 10S:Ion diffusion resistance | 155 | 172 | 137 | 205 |
| | Total | 597 | 578 | 550 | 803 |
| C rate capability | 0.5 C Discharge capacity(mAh) | 162 | 161 | 161 | 154 |
| | 0.5 C Capacity retention(%) | 97.3 | 95.5 | 99.1 | 96.2 |
| | 0.75 C Discharge capacity (mAh) | 157 | 156 | 151 | 139 |
| | 0.75 C Capacity retention(%) | 94.1 | 92.1 | 93.0 | 87.2 |
| | 1.0 C Discharge capacity (mAh) | 145 | 136 | 143 | 115 |
| | 1.0 C Capacity retention(%) | 86.9 | 80.6 | 88.2 | 71.8 |
| | 1.5 C Discharge capacity (mAh) | 93 | 91 | 101 | 61 |
| | 1.5 C Capacity retention(%) | 55.7 | 53.5 | 62.0 | 38.3 |
| | 2.0 C Discharge capacity(mAh) | 62 | 56 | 80 | 26 |
| | 2.0 C Capacity retention(%) | 37.5 | 33.0 | 49.1 | 16.3 |
| | 2.5 C Discharge capacity(mAh) | 51 | 46 | 63 | 14 |
| | 2.5 C Capacity retention(%) | 30.7 | 27.1 | 39.0 | 9.0 |
| Durability test | Discharge capacity after 200 cycles (mAh) | 165 | 164 | 161 | 134 |
| | Capacity retention after 200 cycles(%) | 98.9 | 96.8 | 99.1 | 83.7 |
| | Discharge capacity after 400 cycles (mAh) | 163 | 157 | 159 | 128 |
| | Capacity retention after 400 cycles(%) | 98.0 | 93.1 | 97.9 | 80.0 |
| | Discharge capacity after 600 cycles (mAh) | 159 | 151 | 154 | 126 |
| | Capacity retention after 600 cycles(%) | 95.7 | 89.3 | 94.6 | 79.0 |
| Post-endurance cell resistance after 600 cycles (Ω) | | 1630 | 1475 | 1440 | 2060 |
| Percentage change in resistance(%) | | 249.4 | 229.0 | 229.0 | 259.7 |

| | | | | | |
|---|---|---|---|---|---|
| Note: Examples 1 and 2 are not examples of the invention | | | | | |

As shown in FIGS. 7 and 8, each of the batteries of Examples 1 to 3, which included the lithium-ion secondary battery electrode according to the present disclosure having the material mixture-free regions, had a reduced cell resistance compared to the battery of Comparative Example 1.

As shown in FIG. 9, the C rate capability of each of Examples 1 to 3 was higher than that of Comparative Example 1.
That is, the batteries including the lithium-ion secondary battery electrodes according to the present disclosure having the material mixture-free regions achieved improved ion diffusivity.

As shown in FIG. 10, the capacity retention of each of Examples 1 to 3, which was determined for every 200 cycles, stayed high even as the number of cycles increased, compared to that of Comparative Example 1.

That is, the batteries including the lithium-ion secondary battery electrodes according to the present disclosure having the material mixture-free regions achieved improved durability.

### EXPLANATION OF REFERENCE NUMERALS

10, 20, 30: Electrode layer
11, 21, 31: Electrode material mixture
12, 22, 32: Material mixture-free region
A: Thickness direction of electrode layer
B: Width direction of material mixture-free region

## Claims

1. A lithium-ion secondary battery electrode comprising:
a current collector made of a porous metal foam; and
an electrode layer including an electrode material mixture filling the current collector,
the electrode layer having a material mixture-free region therein where the current collector is not filled with the electrode material mixture,
wherein the material mixture-free region is filled with an electrolytic solution,
wherein the material mixture-free region penetrates through the electrode layer,
and has a quadrilateral prism shape or a cylinder shape, and
the material mixture-free region comprises a plurality of material-free regions that are arranged substantially perpendicular to each other.

2. The lithium-ion secondary battery electrode according to claim 1, wherein the current collector is made of aluminum foam.

3. The lithium-ion secondary battery electrode according to claim 1 or 2 being a positive electrode.

4. The lithium-ion secondary battery electrode according to claim 1, wherein the current collector is made of copper foam.

5. The lithium-ion secondary battery electrode according to claim 1 or 4 being a negative electrode.

6. A lithium-ion secondary battery comprising:
a positive electrode;
a negative electrode; and
a separator or a solid electrolyte layer disposed between the positive electrode and the negative electrode,
at least one of the positive electrode and the negative electrode being the lithium-ion secondary battery electrode according to any one of claims 1 to 5.

## Patentansprüche

1. Lithium-Ionen-Sekundärbatterie-Elektrode, umfassend:
einen Stromabnehmer, der aus einem porösem Metallschaum hergestellt ist; und
eine Elektrodenschicht, die eine Elektrodenmaterialmischung umfasst, die den Stromabnehmer füllt,
wobei die Elektrodenschicht einen materialmischungsfreien Bereich darin aufweist, in dem der Stromabnehmer nicht mit der Elektrodenmaterialmischung gefüllt ist,
wobei der materialmischungsfreie Bereich mit einer Elektrolytlösung gefüllt ist,
wobei der materialmischungsfreie Bereich die Elektrodenschicht durchdringt
und eine vierseitige Prismaform oder eine zylindrische Form aufweist und
der materialmischungsfreie Bereich eine Mehrzahl an materialfreien Bereichen umfasst, die im Wesentlichen senkrecht zueinander angeordnet sind.

2. Lithium-Ionen-Sekundärbatterie-Elektrode nach Anspruch 1, wobei der Stromabnehmer aus einem Aluminiumschaum hergestellt ist.

3. Lithium-Ionen-Sekundärbatterie-Elektrode nach Anspruch 1 oder 2, die eine positive Elektrode ist.

4. Lithium-Ionen-Sekundärbatterie-Elektrode nach Anspruch 1, wobei der Stromabnehmer aus Kupferschaum hergestellt ist.

5. Lithium-Ionen-Sekundärbatterie-Elektrode nach Anspruch 1 oder 4, die eine negative Elektrode ist.

6. Lithium-Ionen-Sekundärbatterie, umfassend:
eine positive Elektrode;
eine negative Elektrode; und
einen Separator oder eine feste Elektrolytschicht, der/die zwischen der positiven Elektrode und
der negativen Elektrode angeordnet ist,
wobei mindestens eine der positiven Elektrode und der negativen Elektrode die Lithium-Ionen-Sekundärbatterie-Elektrode nach einem der Ansprüche 1 bis 5 ist.

## Revendications

1. Électrode de batterie secondaire au lithium-ion comprenant :
un collecteur de courant constitué d'une mousse métallique poreuse ; et
une couche d'électrode comportant un mélange de matériau d'électrode remplissant le collecteur de courant,
la couche d'électrode ayant une région sans mélange de matériau où le collecteur de courant n'est pas rempli du mélange de matériau d'électrode,
dans laquelle la région sans mélange de matériau est remplie d'une solution électrolytique,
dans laquelle la région sans mélange de matériau pénètre à travers la couche d'électrode,
et présente une forme de prisme quadrilatéral ou une forme cylindrique, et
la région sans mélange de matériau comprend une pluralité de régions sans matériau qui sont agencées sensiblement perpendiculairement les unes aux autres.

2. Électrode de batterie secondaire au lithium-ion selon la revendication 1, dans laquelle le collecteur de courant est constitué d'une mousse d'aluminium.

3. Électrode de batterie secondaire au lithium-ion selon la revendication 1 ou 2 étant une électrode positive.

4. Électrode de batterie secondaire au lithium-ion selon la revendication 1, dans laquelle le collecteur de courant est constitué d'une mousse de cuivre.

5. Électrode de batterie secondaire au lithium-ion selon la revendication 1 ou 4 étant une électrode négative.

6. Batterie secondaire au lithium-ion comprenant :
une électrode positive ;
une électrode négative ; et
un séparateur ou une couche d'électrolyte solide disposée entre l'électrode positive et l'électrode négative,
au moins l'une de l'électrode positive et de l'électrode négative étant l'électrode de batterie secondaire au lithium-ion selon l'une quelconque des revendications 1 à 5.
